(19) Europäisches Patentamt
European Patent Office
Office européen des brevets

(11) **EP 2 562 286 B1**

(12) **EUROPEAN PATENT SPECIFICATION**

(45) Date of publication and mention
of the grant of the patent:
**17.07.2019 Bulletin 2019/29**

(51) Int Cl.:
*C22C 38/00* (2006.01)    *C22C 38/38* (2006.01)
*C22C 38/24* (2006.01)    *C22C 38/02* (2006.01)
*C22C 38/04* (2006.01)    *C22C 38/06* (2006.01)
*B32B 15/01* (2006.01)    *C21D 8/02* (2006.01)
*C23C 2/06* (2006.01)     *C23C 2/28* (2006.01)
*C21D 9/46* (2006.01)     *C21D 1/09* (2006.01)
*C22C 38/20* (2006.01)    *C22C 38/22* (2006.01)
*C22C 38/26* (2006.01)    *C22C 38/28* (2006.01)
*C22C 38/46* (2006.01)    *C22C 38/58* (2006.01)

(21) Application number: **11772094.6**

(22) Date of filing: **15.04.2011**

(86) International application number:
**PCT/JP2011/059888**

(87) International publication number:
**WO 2011/132763 (27.10.2011 Gazette 2011/43)**

(54) **HIGH STRENGTH HOT-DIP GALVANIZED STEEL SHEET WITH SUPERIOR WORKABILITY AND PRODUCTION METHOD THEREFOR**

HOCHFESTES FEUERVERZINKTES STAHLBLECH MIT HERVORRAGENDER VERARBEITBARKEIT UND VERFAHREN ZU SEINER HERSTELLUNG

TÔLE D'ACIER GALVANISÉ AU TREMPÉ, D'UNE GRANDE RÉSISTANCE, À APTITUDE AU FAÇONNAGE SUPÉRIEURE, ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.04.2010 JP 2010098740**

(43) Date of publication of application:
**27.02.2013 Bulletin 2013/09**

(73) Proprietor: **JFE Steel Corporation Tokyo 100-0011 (JP)**

(72) Inventors:
• **KARIYA, Nobusuke**
  **Tokyo 100-0011 (JP)**
• **SAITO, Hayato**
  **Tokyo 100-0011 (JP)**
• **YOKOTA, Takeshi**
  **Tokyo 100-0011 (JP)**

(74) Representative: **Grünecker Patent- und Rechtsanwälte PartG mbB Leopoldstraße 4 80802 München (DE)**

(56) References cited:
EP-A1- 1 195 447        EP-A1- 1 367 143
EP-A1- 1 443 124        WO-A1-2009/096115
WO-A1-2009/119751       JP-A- H0 673 497
JP-A- 2004 238 679      JP-A- 2008 156 734
JP-A- 2008 156 734      JP-A- 2009 035 818
JP-A- 2010 013 700      JP-A- 2010 229 493

**Description**

[Technical Field]

The present invention relates to a high-strength galvanized steel sheet having a tensile strength of 590 MPa or more and excellent formability suitable for the use for automobile parts and the like and to a method for manufacturing the same.

[Background Art]

In recent years, reduction of exhaust gas, such as $CO_2$, has been continuously tried in industrial fields in view of global environmental conservation. In particular, in automobile industries, countermeasures have been carried out to reduce the amount of exhaust gas by improvement in fuel consumption through weight reduction of automobile bodies. As one method for reducing the weight of automobile bodies, while the strength of steel sheets used for automobiles is increased, reduction in thickness of the steel sheets has been progressively performed.

In addition, in the environment in which safety regulations for automobiles against collision are more strictly enforced, in order to improve collision resistance of automobile bodies, application of high-strength steel sheets, for example, to structural components and reinforcing members of automobiles has been studied. When high-strength steel sheets are used, for example, for structural components and reinforcing members of automobiles, hole expanding processing (burring) is frequently performed after hole cutting is performed by punching processing, and hence high-strength steel sheets are desired to have excellent stretch flange formability (hole expanding properties). Heretofore, in the punching processing, mechanical processing has been primarily performed using a punch cutting die; however, in order to reduce die maintenance cost, a method using laser processing has been tried for hole cutting and has been practically used in some cases as disclosed in Non Patent Literature 1.

As for a high-strength galvanized steel sheet having excellent formability, for example, Patent Literature 1 has proposed a galvanized steel sheet and a galvannealed steel sheet, each of which is excellent in corrosion resistance, elongation, and hole expanding properties, and a method for manufacturing the above steel sheets. In each of the steel sheets described above, its component composition is adjusted in an appropriate range so as to form a ferrite/martensite microstructure primarily composed of ferrite and to define microsegregation of Mn in a sheet thickness direction. However, in the technique disclosed in Patent Literature 1, a hole expanding test method has not been disclosed, and concrete evaluation of hole expanding properties obtained in the case of hole cutting by laser processing has also not been disclosed.

Patent Literature 2 has disclosed a high-strength galvannealed steel sheet excellent in formability, having a tensile strength (TS) of approximately 390 to 690 MPa, and bake hardenability and a method for manufacturing the same, the steel sheet being obtained by optimizing a component composition and the condition of a three-phase complex microstructure containing a ferrite phase, a bainite phase, and a martensitic phase. In addition, in Patent Literature 3, a method for manufacturing a high-strength galvanized steel sheet excellent in bending workability has been proposed in which a uniform and fine complex microstructure of bainite/ferrite/martensite primarily composed of bainite or ferrite/bainite is formed by controlling a heating temperature of recrystallization annealing of a galvanizing line, a cooling rate from the heating temperature to a temperature in a range of from Ms to 480°C, and a holding time at this temperature. In the techniques disclosed in Patent Literatures 2 and 3, although hole expandability is evaluated as the formability and bending workability, a punching method has not been disclosed in Patent Literature 2, and in Patent Literature 3, although a hole expanding ratio is evaluated using a hole having a diameter of 10 mm formed by punching, in both techniques, the hole expanding ratio using a hole cut by laser processing has not been evaluated.

EP 1 443 124 A1 discloses a hot-dip galvanized steel with high workability having a structure consisting essentially of ferrite having an average grain size of 20 μm or less and martensite with a volume percentage of 5 to 40%.

[Citation List]

[Patent Literatures]

[PTL 1] Japanese Unexamined Patent Application Publication No. 2007-070659
[PTL 2] Japanese Unexamined Patent Application Publication No. 6-73497
[PTL 3] Japanese Unexamined Patent Application Publication No. 4-173945

[Non Patent Literature]

[NPL 1] "Tetsu-to-Hagane", 75th (1989) No. 7, pp. 10-24

[Summary of Invention]

[Technical Problem]

The present invention was made in consideration of the problems of the conventional techniques described above, and an object of the present invention is to provide a high-strength galvanized steel sheet having a tensile strength of 590 MPa or more and excellent formability (stretch flange formability) after hole cutting by laser processing and a method for manufacturing the high-strength galvanized steel sheet.

[Solution to Problem]

Through intensive research to achieve the above object carried out on the stretch flange formability of a high-strength galvanized steel sheet having a hole cut by laser processing, the present inventors found that it is significantly important to appropriately control addition elements, a steel microstructure, and manufacturing conditions, in particular, manufacturing conditions of a hot rolling step and a continuous galvanizing and galvannealing step. In addition, it was also found that when a steel microstructure is formed so that ferrite having an average grain diameter of 15 micrometer or less and 5% to 40% of martensite in an area ratio are contained, and the ratio of martensite having an aspect ratio of less than 3.0 to all the martensite is more than 95% in area ratio, the stretch flange formability of a high-strength galvanized steel sheet having a hole cut by laser processing is improved.

The present invention was made based on the findings described above and provides the following (1) to (3).

(1) A high-strength galvanized steel sheet having excellent formability comprises: steel having a component composition consisting of, on a percent by mass basis, 0.03% to 0.15% of C, less than 0.5% of Si, 1.0% to 2.5% of Mn, 0.05% or less of P, 0.01% or less of S, 0.05% or less of Al, 0.0050% or less of N, 0.05% to 0.8% of Cr, 0.01% to 0.1% of V, optionally at least one of 0.01% to 0.1% of Ti, 0.01% to 0.1% of Nb, 0.01% to 0.1% of Cu, 0.01% to 0.1% of Ni, 0.001% to 0.01% of Sn, and 0.01% to 0.5% of Mo and 0.0001% to 0.1% of REM, and the balance being Fe and inevitable impurities; and a zinc plating film on a surface of a steel sheet, wherein a microstructure of the steel contains ferrite having an average grain diameter of 15 $\mu$m or less and 5% to 40% of martensite in an area ratio, and the ratio of martensite having an aspect ratio of less than 3.0 to all the martensite is more than 95% in area ratio, and the total of the area ratio of martensite and the area ratio of ferrite is 95% or more.

(2) A method for manufacturing a high-strength galvanized steel sheet comprises the steps of: performing finish rolling of a steel material having the component composition described in the above (1) at a temperature of $Ar_3$ or more; then performing coiling at a temperature of 600°C or less; performing cooling at an average cooling rate of 5°C/min or more from the completion of the coiling to 400°C; performing pickling or further performing cold rolling at a rolling reduction of 40% or more; then performing soaking at a temperature of 700°C to 820°C; performing cooling to 600°C or less at an average cooling rate of 1°C to 50°C/sec; performing galvanizing or further performing an alloying treatment of a plated layer; and then performing cooling to room temperature, wherein in a process from the cooling performed to 600°C or less to the cooling performed to room temperature, a residence time in a temperature region of 400°C to 600°C is set to 150 seconds or less.

[Advantageous Effects of Invention]

Accordingly, the present invention provides a high-strength galvanized steel sheet having a tensile strength of 590 MPa or more and excellent formability (stretch flange formability) which is obtained when hole expanding processing is performed after hole cutting is performed by laser processing.

[Brief Description of Drawing]

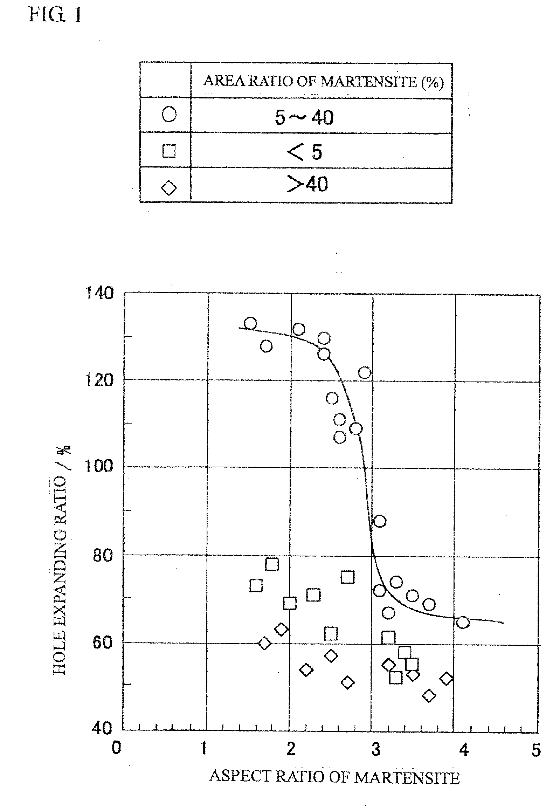

Fig. 1 is a view showing the relationship of an aspect ratio of martensite with an area ratio thereof and a hole expanding ratio $\lambda$.

[Description of Embodiments]

First, experimental results used for making the present invention will be described. After a steel slab containing, on a percent by mass basis, 0.09% of C, 0.15% of Si, 1.75% of Mn, 0.035% of P, 0.0006% of S, 0.035% of Al, 0.0025% of N, 0.21% of Cr, 0.017% of V, and the balance being Fe and inevitable impurities was processed by rough rolling and hot rolling including 7-pass finish rolling, so that a hot rolled sheet steel having a sheet thickness of 3.6 mm was formed. In this case, the finish rolling was performed at 700°C to 900°C, a coiling temperature was set to 450°C to 700°C, and the average cooling rate after coiling was changed to from air cooling (1°C/min) to 50°C/min (in this case, the cooling rate was an average cooling rate from the completion of the coiling to 400°C). Next, after pickling was performed, a cold rolling process and a continuous galvanizing and galvannealing process were performed on this hot rolled steel sheet, so that a test specimen having a sheet thickness of 1.4 mm was obtained. In the continuous galvanizing and galvannealing process, the soaking temperature was changed to from 670°C to 900°C, the average cooling rate after the soaking was changed to from 0.3°C to 100°C/sec, and the residence time between 400°C to 600°C was changed to from 30 to 300 seconds during cooling performed from 600°C to room temperature. The steel microstructures of these test specimens were observed, and the tensile properties and the stretch flange formability thereof were also evaluated.

For the evaluation of the steel microstructure, after three sectional positions of the steel sheet at a position of 1/4 thickness thereof in a direction parallel to the rolling direction were polished and etched using a nital solution, 10 visual fields per one sectional position (total 30 visual fields) were observed by a scanning electron microscope at a magnification of 1,000 times, and the images were measured by image analysis processing using an image analysis software "Image Pro Plus ver. 4.0" manufactured by Media Cybernetics Co., Ltd. That is, by the image analysis, ferrite, perlite, cementite, and martensite were sorted, and the grain diameter of ferrite, the area ratio of martensite, and the aspect ratio thereof were obtained. The aspect ratio was an average value of (long axis of ellipse)/(short axis of ellipse) obtained by approximating martensite grains as elliptic grains using an image analysis device.

In this experiment, in accordance with the hot rolling conditions and the continuous galvanizing and galvannealing conditions, the aspect ratio of martensite, the average grain diameter of ferrite, and the area ratio of martensite were changed. In addition, under all the conditions, the average grain diameter of ferrite was 15 μm or less, and the total of the area ratio of martensite and the area ratio of ferrite was 95% or more.

In order to evaluate the stretch flange formability, a test sheet (size: 100 mm × 100 mm) for a hole expanding test was formed from the obtained test specimen, and the hole expanding test was performed. A hole having a diameter of 10 mm was formed at the center of the test sheet by laser processing. Subsequently, after hole expanding processing was performed on this hole using a conical punch with 60° top angle, a hole diameter d (mm) was measured when a thickness direction penetration crack was generated in a hole edge, and a hole expanding ratio λ (%) defined by the following formula was calculated.

$$\lambda=100\times(d-10)/10$$

 In addition, the same test as that described above was carried out five times, and the average hole expanding ratio λ was calculated.
The results thus obtained are shown in Fig. 1. In Fig. 1, the aspect ratio of martensite is an aspect ratio at which the cumulative frequency of the area ratio of martensite is more than 95% of all martensite (the area ratio of martensite having an aspect ratio lower than that described above is more than 95%).

From Fig. 1, it is found that in the steel microstructure, when the average grain diameter of ferrite is 15 μm or less, the total of the area ratio of martensite and the area ratio of ferrite is 95% or more, the area ratio of martensite is 5% to 40%, and the aspect ratio of martensite is less than 3.0, that is, the ratio of martensite having an aspect ratio of less than 3.0 to all martensite is more than 95% in area ratio, the stretch flange formability is significantly improved.

Hereinafter, the reasons for limiting the component composition of the steel sheet according to the present invention will be described. Incidentally, the percent by mass of the composition will be simply described by % unless particularly noted otherwise.

C: 0.03% to 0.15%

C is an essential element to ensure a desired strength, and for this purpose, 0.03% or more of C is required. On the other hand, when more than 0.15% of C is added, a hole side surface is excessively hardened by hole cutting using laser processing, and the stretch flange formability is degraded. Accordingly, the content of C is set in a range of 0.03% to 0.15%.

Si: less than 0.5%

Although Si is an effective element to strengthen steel, when the addition amount is 0.5% or more, the adhesion of plating and the surface appearance are considerably degraded. Hence, the content of Si is set to less than 0.5%. In addition, the content is preferably 0.2% or less.

Mn: 1.0% to 2.5%

Mn is an essential element to ensure a desired strength as in the case of C. In order to ensure a desired strength, 1.0% or more of Mn is required as a lower limit, but when the content is more than 2.5%, as in the case of excessive addition of C, the hole side surface is excessively hardened due to excessive hardening, and as a result, the stretch flange formability is degraded. Hence, the content of Mn is set in a range of 1.0% to 2.5%.

P: 0.05% or less

Although P is an effective element to strengthen steel, when the addition amount thereof is more than 0.05%, a surface oxide layer (scale) generated by hot rolling is excessively exfoliated, and the surface conditions after plating is degraded. Hence, the content of P is set to 0.05% or less.

S: 0.01% or less

When the addition amount of S is more than 0.01%, the stretch flange formability is degraded. Hence, the content of S is set to 0.01% or less.

Al: 0.05% or less

Since the surface appearance after plating is considerably degraded when the content of Al is more than 0.05%, the content thereof is set to 0.05% or less.

N: 0.0050% or less

As long as the content of N is 0.0050% or less, which is the amount contained in common steel, the effect of the present invention is not degraded. Hence, the content of N is set to 0.0050% or less.

Cr: 0.05% to 0.8%

Since Cr is an effective element to strengthen steel by improving the hardenability of steel, 0.05% or more of Cr is added. On the other hand, when the addition amount is more than 0.8%, the above effect is saturated, and the adhesion of plating is degraded due to a Cr-based oxide formed on the surface of a steel sheet during annealing; hence, the content of Cr is set in a range of 0.05% to 0.8%.

V: 0.01% to 0.1%

Since V is an effective element to strengthen steel by improving the hardenability of steel, 0.01% or more of V is added. On the other hand, when the addition amount is more than 0.1%, hardening of steel is excessively performed, and as in the case of C and Mn, the hole side surface is excessively hardened, so that the stretch flange formability is degraded. Hence, the content of V is set in a range of 0.01% to 0.1%.

Although the components described above form a basic composition, besides the above basic composition, in the present invention, at least one of 0.01% to 0.1% of Ti, 0.01% to 0.1% of Nb, 0.01% to 0.1% of Cu, 0.01% to 0.1% of Ni, 0.001% to 0.01% of Sn, and 0.01% to 0.5% of Mo may also be contained.

Ti and Nb are added in order to increase the strength by miniaturization of the microstructure and precipitation strengthening. Mo is an effective element to improve hardenability of steel and is added in order to increase the strength. Cu, Ni, and Sn are elements to improve the strength and are added in order to strengthen steel. The lower limit of each element is a minimum amount at which a desired effect is obtained, and the upper limit is an amount at which the effect is saturated.

In addition, 0.0001% to 0.1% of REM, which does not considerably change the plating properties, which has a function of controlling the form of sulfide-based inclusions, and which is effective to improve the formability, may also be contained. The balance other than the components described above is Fe and inevitable impurities.

Next, the reason for limiting the microstructure of the steel sheet according to the present invention will be described.

The microstructure (steel microstructure) of the steel sheet according to the present invention has ferrite having an average grain diameter of 15 μm or less and 5% to 40% of martensite in area ratio, and in the above martensite, the ratio of martensite having an aspect ratio of less than 3.0 to the total martensite is more than 95% in area ratio. By the microstructure described above, the stretch flange formability of a material in which hole cutting is performed by laser processing is significantly improved.

In the hole cutting by laser processing, since the vicinity of the hole side surface is heated and cooled for an extremely short period of time, the steel microstructure is changed into a microstructure primarily composed of martensite. When the aspect ratio of martensite is 3.0 or more, in the microstructure of the hole side surface after laser processing, martensite grains are connected to each other to form coarse and large martensite, and minute cracks generated at an early stage of the hole expanding processing are propagated to cause thickness direction penetration cracks, thereby causing degradation of the stretch flange formability. In addition, although the aspect ratio of martensite is less than 3.0, when the area ratio of martensite having an aspect ratio of less than 3.0 to the total martensite is 95% or less, in the microstructure of the hole side surface after laser processing, martensite grains are connected to each other, the amount of coarse and large martensite is increased thereby, and minute cracks generated at an early stage of the hole expanding processing are propagated to cause thickness direction penetration cracks, thereby causing degradation of the stretch flange formability. When the area ratio of martensite having an aspect ratio of less than 3.0 to the total martensite is more than 95%, the thickness direction penetration cracks caused by propagation of minute cracks generated at an early stage of the hole expanding processing are prevented, and hence excellent stretch flange formability is obtained. Accordingly, in the present invention, the area ratio of martensite having an aspect ratio of less than 3.0 to the total martensite is limited to more than 95%.

Since the difference in hardness between a ferrite phase and a martensitic phase is increased when the area ratio of martensite of the steel microstructure is more than 40% or less than 5%, the propagation of minute cracks generated at an early stage of the hole expanding processing becomes faster, and the stretch flange formability is degraded. Hence, the area ratio of martensite is limited to a range of 5% to 40%.

Control of the grain diameter of ferrite is also important. In hole cutting by laser processing, the vicinity of the hole side surface is heated and cooled for an extremely short period of time. When the grain diameter of ferrite is increased, the precipitation of ferrite is suppressed after heating and cooling for an extremely short period of time for hole cutting by laser processing, and ferrite and martensitic microstructures are made non-uniform, and an effect of suppressing crack propagation caused by hole expanding processing is degraded, thereby degrading the stretch flange formability. When the average grain diameter of ferrite is set to 15 μm or less, in the vicinity of the hole side surface, the precipitation of ferrite after heating and cooling performed for an extremely short period of time can be promoted, and the ferrite and martensitic microstructures can be made uniform; hence, the crack propagation caused by the hole expanding processing can be suppressed, and the stretch flange formability can be improved. Accordingly, the average grain diameter of ferrite is limited to 15 μm or less.

In addition, even if in the steel microstructure, besides ferrite and 5% to 40% of martensite in area ratio, a microstructure of cementite, bainite, and/or the like in area ratio of 5% or less is contained, the effect of the present invention is not degraded.

Next, a preferable method for manufacturing a steel sheet according to the present invention will be described.

It is preferable that after molten steel having the composition described above is manufactured by a common steel making method using a converter or the like, a steel material (slab) be formed by a common casting method, such as a continuous casting method.

Subsequently, hot rolling is performed such that the steel material thus obtained is heated and rolled into a hot rolled sheet. The hot rolling is preferably performed such that a finish temperature of finish rolling is set to $Ar_3$ or more, coiling is performed at a temperature of 600°C or less, and after the coiling, cooling is performed at an average cooling rate of 5°C/min or more.

Finish temperature of finish rolling: $Ar_3$ or more

When the finish temperature of finish rolling is less than $Ar_3$, since ferrite is generated, by coarsening and the like caused by a process strain thereof, the microstructure in a sheet thickness direction is made non-uniform, and in the microstructure after annealing, the ratio of martensite having an aspect ratio of less than 3.0 cannot exceed 95% in area ratio. Hence, the finish temperature of finish rolling is set to $Ar_3$ or more. Although $Ar_3$ can be calculated from the following formula (1), an actually measured temperature may also be used.

$$Ar_3 = 910 - 310 \times [C] - 80 \times [Mn] + 0.35 \times (t - 0.8) \quad \dots \quad (1)$$

In the above formula, [C] and [Mn] each represent the content (%) of element, and t represents a sheet thickness (mm).

In addition, in accordance with contained elements, correction terms may be introduced, and for example, when Cu, Cr, Ni, and Mo are contained, correction terms, such as - 20×[Cu], -15×[Cr], -55×[Ni], and -80×[Mo], may be added to the right-hand side of the formula (1). In this case, [Cu], [Cr], [Ni], and [Mo] each represent the content (%) of element.

Coiling temperature: 600°C or less

When the coiling temperature exceeds 600°C, lamellar-shaped perlite having a high aspect ratio is generated, and even if the perlite is divided by cold rolling and/or annealing, in a steel sheet processed by galvanizing, the ratio of martensite having an aspect ratio of less than 3.0 is 95% or less in area ratio, thereby degrading the stretch flange formability. Hence, the coiling temperature is set to 600°C or less. In addition, since the shape of a hot rolled sheet is degraded, the coiling temperature is preferably set to 200°C or more.

Average cooling rate to 400°C after coiling: 5°C/min or more

When the average cooling rate to 400°C after coiling is less than 5°C/min, precipitated perlite grows in a major axis direction, and the aspect ratio thereof is increased; hence, in a steel sheet processed by a continuous galvanizing and galvannealing process, the ratio of martensite having an aspect ratio of less than 3.0 is 95% or less in area ratio, and the stretch flange formability is degraded. Hence, the average cooling rate to 400°C after coiling is set to 5°C/min or more. In addition, since the effect described above is saturated even when the average cooling rate is set to 20°C/min or more, the upper limit is preferably set to 20°C/min.

After the hot rolling is performed, pickling is performed and is followed by cold rolling if needed, and the continuous galvanizing and galvannealing process is then performed. The pickling may be performed in accordance with a common method. In the cold rolling, the rolling reduction is preferably set as follows, and other conditions may be selected in accordance with a common method.

Rolling reduction of cold rolling: 40% or more

When the rolling reduction of cold rolling is less than 40%, recrystallization of ferrite is not likely to progress, and as the ductility is degraded, martensite is precipitated along grain boundaries of crystal grains extended in a rolling direction, and the ratio of martensite having an aspect ratio of less than 3.0 is difficult to be more than 95% in area ratio. Hence, the rolling reduction of cold rolling is set to 40% or more.

In the continuous galvanizing and galvannealing process, after soaking is performed at 700°C to 820°C, cooling is performed to a temperature region of 600°C or less at an average cooling rate of 1°C to 50°C/sec, galvanizing is performed, and an alloying treatment is further performed if needed.

In order to obtain a desired area ratio of martensite, the soaking temperature is required to set to 700°C or more; however, when the temperature is more than 820°C, since the grain diameter of ferrite is increased, and desired properties are not obtained, the above temperature is set as an upper limit. The reasons the cooling to a temperature region of 600°C or less is performed at an average cooling rate of 1°C to 50°C/sec are to prevent generation of perlite and to precipitate fine ferrite, and the reason the lower limit of cooling rate is defined is that when the cooling rate is less than that described above, perlite is generated, and/or the grain diameter of ferrite is increased. Since the area ratio of martensite exceeds 40% when the cooling rate is more than that described above, the upper limit of the cooling rate is defined.

After the cooling to a temperature region of 600°C or less is performed, galvanizing is performed and is followed by an alloying treatment if needed, and cooling is then performed to ordinary temperature. After the cooling to a temperature region of 600°C or less is performed, when the residence time in a temperature region of 400°C to 600°C is long in a process of cooling to ordinary temperature, cementite is remarkably precipitated from austenite, the area ratio of martensite is decreased, and the strength is decreased; hence, the upper limit of the residence time in a temperature region of 400°C to 600°C is set to 150 seconds.

Even if various surface treatments, such as chemical conversion, are performed on the high-strength galvanized steel sheet thus obtained, the effect of the present invention is not degraded.

[Examples]

Steel materials (slabs) having the compositions shown in Table 1 were each used as a starting material. After heated at temperatures shown in Table 2, the steel materials were each processed by hot rolling, cold rolling, and continuous galvanizing and galvannealing under the conditions shown in Table 2. The galvanized amount was adjusted to 60 g/m$^2$ per one side, and an alloying treatment was adjusted so that the Fe content in the film was 10%. The microstructure observation, tensile test, and stretch flange formability of each of the steel sheets thus obtained were evaluated. The test methods are as follows.

(1) Microstructure observation

For the evaluation of the steel microstructure, after three sectional positions of the steel sheet at a position of 1/4 thickness thereof in a direction parallel to the rolling direction were polished and etched using a nital solution, 10 visual fields per one sectional position (total 30 visual fields) were observed by a scanning electron microscope at a magnification of 1,000 times, and the images were measured by image analysis processing using an image analysis software "Image Pro Plus ver. 4.0" manufactured by Media Cybernetics Co., Ltd. That is, by the image analysis, ferrite, perlite, cementite, and martensite were sorted, and the grain diameter of ferrite, the area ratio of martensite, and the area ratio of martensite having an aspect ratio of less than 3.0 were obtained. The aspect ratio was an average value of (long axis of ellipse)/(short axis of ellipse) obtained by approximating martensite grains as elliptic grains using an image analysis device.

(2) Tensile test

A JIS No. 5 test piece for tensile test was formed from the obtained steel sheet along a rolling direction, and the tensile test was performed. The tensile test was performed until the test piece was fractured, and the tensile strength (TS) was obtained. The same test was carried out twice for each sample, and the average value was calculated and was regarded as the tensile characteristic value of the sample.

(3) Stretch flange formability

In order to evaluate the stretch flange formability, a test sheet (size: 100 mm × 100 mm) for hole expanding test was formed from the obtained test specimen, and the hole expanding test was carried out. A hole having a diameter of 10 mm was formed at the center of the test sheet by laser processing. Subsequently, after hole expanding processing was performed on the hole using a conical punch (diameter: 50 mm, shoulder R: 8 mm), a hole diameter d (mm) was measured when a thickness direction penetration crack was generated in a hole edge, and a hole expanding ratio λ (%) defined by the following formula was calculated.

$$\lambda = 100 \times (d-10)/10$$

In addition, the same test was carried out five times, the average hole expanding ratio λ was obtained, and a test sheet having an average hole expanding ratio λ of 90% or more was judged to have good stretch flange formability.
The obtained results are also shown in Table 2.

[Table 1]

(percent by mass)

| Steel No. | C | Si | Mn | P | S | Al | N | Cr | V | Ti | Nb | Cu | Ni | Sn | Mo | Remarks |
|---|---|---|---|---|---|---|---|---|---|---|---|---|---|---|---|---|
| A | 0.09 | 0.14 | 1.9 | 0.033 | 0.0018 | 0.035 | 0.0033 | 0.20 | 0.016 | - | - | - | - | - | - | Present invention steel |
| B | 0.12 | 0.01 | 1.7 | 0.015 | 0.0025 | 0.021 | 0.0015 | 0.15 | 0.030 | - | - | - | - | - | - | Present invention steel |
| C | 0.08 | 0.22 | 1.8 | 0.023 | 0.0011 | 0.037 | 0.0036 | 0.23 | 0.036 | 0.03 | - | - | - | - | - | Present invention steel |
| D | 0.08 | 0.05 | 2.1 | 0.028 | 0.0031 | 0.033 | 0.0024 | 0.18 | 0.031 | - | - | - | - | - | - | Present invention steel |
| E | 0.06 | 0.19 | 2.0 | 0.015 | 0.0057 | 0.019 | 0.0022 | 0.27 | 0.035 | - | - | - | - | - | - | Present invention steel |
| F | 0.10 | 0.15 | 1.8 | 0.032 | 0.0023 | 0.031 | 0.0039 | 0.17 | 0.040 | - | 0.02 | - | - | - | - | Present invention steel |
| G | 0.09 | 0.05 | 1.9 | 0.019 | 0.0044 | 0.026 | 0.0018 | 0.21 | 0.050 | - | - | 0.02 | - | - | - | Present invention steel |
| H | 0.11 | 0.13 | 1.7 | 0.007 | 0.0068 | 0.034 | 0.0035 | 0.33 | 0.030 | - | - | - | 0.02 | - | - | Present invention steel |
| I | 0.07 | 0.20 | 2.1 | 0.035 | 0.0008 | 0.038 | 0.0048 | 0.25 | 0.024 | - | - | - | - | 0.003 | - | Present invention steel |
| J | 0.10 | 0.07 | 2.2 | 0.024 | 0.0035 | 0.022 | 0.0027 | 0.18 | 0.045 | - | - | - | - | - | 0.02 | Present invention steel |
| K | 0.05 | 0.20 | 2.1 | 0.018 | 0.0030 | 0.023 | 0.0033 | 0.34 | 0.080 | - | - | - | - | - | - | Present invention steel |
| L | 0.08 | 0.08 | 2.4 | 0.032 | 0.0026 | 0.036 | 0.0011 | 0.13 | 0.030 | - | - | - | - | - | - | Present invention steel |
| M | 0.14 | 0.11 | 1.8 | 0.026 | 0.0024 | 0.012 | 0.0032 | 0.16 | 0.035 | - | - | - | - | - | - | Present invention steel |
| N | 0.13 | 0.09 | 1.1 | 0.030 | 0.0006 | 0.025 | 0.0029 | 0.40 | 0.055 | - | - | - | - | - | - | Present invention steel |
| O | 0.07 | 0.21 | 1.8 | 0.031 | 0.0033 | 0.025 | 0.0041 | 0.65 | 0.040 | - | - | - | - | - | - | Present invention steel |
| P | 0.08 | 0.30 | 1.8 | 0.037 | 0.0031 | 0.015 | 0.0034 | 0.22 | 0.053 | - | - | - | - | - | - | Present invention steel |
| Q | 0.11 | 0.17 | 2.2 | 0.029 | 0.0042 | 0.027 | 0.0019 | 0.07 | 0.060 | - | - | - | - | - | - | Present invention steel |
| R | 0.10 | 0.45 | 1.5 | 0.025 | 0.0027 | 0.030 | 0.0037 | 0.37 | 0.025 | - | - | - | - | - | - | Present invention steel |
| S | 0.08 | 0.01 | 2.0 | 0.013 | 0.0009 | 0.036 | 0.0031 | 0.06 | 0.021 | - | - | - | - | - | 0.15 | Present invention steel |
| T | 0.08 | 0.18 | 1.8 | 0.016 | 0.0015 | 0.029 | 0.0033 | 0.06 | 0.050 | 0.02 | - | - | - | - | 0.13 | Present invention steel |
| a | 0.12 | 0.02 | 2.0 | 0.022 | 0.0033 | 0.034 | 0.0028 | **0.01** | **0.005** | - | - | - | - | - | - | Comparative steel |
| b | 0.09 | 0.14 | **0.8** | 0.036 | 0.0028 | 0.031 | 0.0037 | **0.02** | 0.033 | - | - | - | - | - | - | Comparative steel |
| c | 0.08 | 0.19 | **2.7** | 0.009 | 0.0011 | 0.018 | 0.0023 | 0.22 | 0.023 | - | - | - | - | - | - | Comparative steel |
| d | 0.11 | 0.22 | **3.1** | 0.024 | 0.0026 | 0.023 | 0.0031 | **0.01** | 0.030 | - | - | - | - | - | - | Comparative steel |

| | | | | | | | | | | | | | | | | (percent by mass) |
|---|---|---|---|---|---|---|---|---|---|---|---|---|---|---|---|---|
| Steel No. | C | Si | Mn | P | S | Al | N | Cr | V | Ti | Nb | Cu | Ni | Sn | Mo | Remarks |
| e | 0.10 | 0.07 | **2.9** | 0.029 | 0.0040 | 0.016 | 0.0035 | 0.18 | **0.008** | - | - | - | - | - | - | Comparative steel |
| f | 0.09 | 0.33 | 1.8 | 0.034 | 0.0037 | 0.029 | 0.0042 | **0.02** | 0.050 | - | - | - | - | - | - | Comparative steel |
| g | **0.17** | 0.07 | 2.0 | 0.017 | 0.0014 | 0.025 | 0.0036 | 0.13 | 0.025 | - | - | - | - | - | - | Comparative steel |
| h | 0.12 | **0.73** | 2.1 | 0.026 | 0.0022 | 0.032 | 0.0025 | 0.15 | 0.030 | - | - | - | - | - | - | Comparative steel |
| i | 0.10 | 0.09 | 1.9 | 0.031 | 0.0025 | 0.030 | 0.0044 | 0.16 | **0.007** | - | - | - | - | - | - | Comparative steel |

[Table 2]

| Steel sheet No. | Steel No. | Hot rolling conditions | | | | | Sheet thickness (mm) | Continuous galvanizing and galvannealing conditions | | | | Microstructure | | | | | Properties | | Remarks |
|---|---|---|---|---|---|---|---|---|---|---|---|---|---|---|---|---|---|---|---|
| | | Heating temperature (°C) | Finish rolling temperature (°C) | Coiling temperature (°C) | Average cooling rate after coiling (°C/min) | Rolling reduction of cold rolling (%) | | Soaking temperature (°C) | Average cooling rate (°C/sec) | Residence time between 400°C to 600°C (sec) | Alloying treatment ○: Yes ×: No | Grain diameter of ferrite ($\mu$m) | Area ratio of martensite (%) | Ratio of martensite having an aspect ratio of less than 3.0 | Area ratio of ferrite (%) | Other micro-structures* | TS (MPa) | $\lambda$ (%) | |
| 1 | A | 1230 | 820 | 570 | 15 | 60 | 1.4 | 800 | 10 | 120 | ○ | 9 | 25 | 97 | 71 | C | 712 | 105 | Present invention example |
| 2 | B | 1200 | 820 | 600 | 10 | 60 | 1.4 | 800 | 10 | 120 | ○ | 10 | 36 | 97 | 60 | C | 845 | 96 | Present invention example |
| 3 | C | 1260 | 820 | 580 | 15 | 60 | 1.4 | 800 | 10 | 120 | ○ | 12 | 13 | 98 | 84 | C | 606 | 124 | Present invention example |
| 4 | D | 1170 | 820 | 580 | 20 | 60 | 1.4 | 800 | 10 | 120 | ○ | 13 | 15 | 96 | 82 | C | 653 | 117 | Present invention example |
| 5 | E | 1200 | 820 | 580 | 20 | 60 | 1.4 | 800 | 10 | 120 | ○ | 11 | 8 | 97 | 88 | C | 599 | 113 | Present invention example |
| 6 | F | 1200 | 820 | 600 | 20 | 60 | 1.4 | 800 | 20 | 120 | ○ | 8 | 31 | 96 | 65 | C | 769 | 103 | Present invention example |
| 7 | G | 1200 | 820 | 590 | 20 | 60 | 1.4 | 800 | 20 | 120 | ○ | 9 | 27 | 96 | 70 | C | 771 | 99 | Present invention example |
| 8 | H | 1200 | 820 | 580 | 25 | 60 | 1.4 | 800 | 10 | 120 | ○ | 11 | 29 | 98 | 68 | C | 830 | 91 | Present invention example |

(continued)

| Steel sheet No. | Steel No. | Hot rolling conditions | | | | | Sheet thickness (mm) | Continuous galvanizing and galvannealing conditions | | | | Microstructure | | | | | Properties | | Remarks |
|---|---|---|---|---|---|---|---|---|---|---|---|---|---|---|---|---|---|---|---|
| | | Heating temperature (°C) | Finish rolling temperature (°C) | Coiling temperature (°C) | Average cooling rate after coiling (°C/min) | Rolling reduction of cold rolling (%) | | Soaking temperature (°C) | Average cooling rate (°C/sec) | Residence time between 400°C to 600°C (sec) | Alloying treatment ○: Yes ×: No | Grain diameter of ferrite (μm) | Area ratio of martensite (%) | Ratio of martensite having an aspect ratio of less than 3.0 | Area ratio of ferrite (%) | Other microstructures* | TS (MPa) | λ (%) | |
| 9 | I | 1200 | 820 | 580 | 25 | 60 | 1.4 | 800 | 10 | 120 | ○ | 12 | 19 | 98 | 78 | C | 620 | 117 | Present invention example |
| 10 | J | 1200 | 820 | 580 | 20 | 60 | 1.4 | 800 | 10 | 120 | ○ | 10 | 33 | 98 | 63 | C | 886 | 92 | Present invention example |
| 11 | K | 1200 | 820 | 580 | 20 | 60 | 1.4 | 800 | 10 | 120 | ○ | 14 | 12 | 98 | 84 | C,B | 617 | 126 | Present invention example |
| 12 | L | 1270 | 820 | 580 | 20 | 60 | 1.4 | 800 | 10 | 120 | ○ | 9 | 15 | 98 | 81 | C | 743 | 103 | Present invention example |
| 13 | M | 1200 | 820 | 580 | 20 | 60 | 1.4 | 800 | 10 | 120 | ○ | 7 | 24 | 98 | 73 | C | 785 | 101 | Present invention example |
| 14 | N | 1230 | 820 | 580 | 20 | 60 | 1.4 | 800 | 10 | 120 | ○ | 13 | 21 | 97 | 77 | C,B | 792 | 95 | Present invention example |
| 15 | O | 1200 | 820 | 580 | 20 | 60 | 1.4 | 800 | 10 | 120 | × | 9 | 10 | 97 | 87 | C,B | 668 | 126 | Present invention example |

| Steel sheet No. | Steel No. | Hot rolling conditions | | | | | | Continuous galvanizing and galvannealing conditions | | | | Microstructure | | | | | Properties | | |
|---|---|---|---|---|---|---|---|---|---|---|---|---|---|---|---|---|---|---|---|
| | | Heating temperature (°C) | Finish rolling temperature (°C) | Coiling temperature (°C) | Average cooling rate after coiling (°C/min) | Rolling reduction of cold rolling (%) | Sheet thickness (mm) | Soaking temperature (°C) | Average cooling rate (°C/sec) | Residence time between 400°C to 600°C (sec) | Alloying treatment ○: Yes ×: No | Grain diameter of ferrite (μm) | Area ratio of martensite (%) | Ratio of martensite having an aspect ratio of less than 3.0 | Area ratio of ferrite (%) | Other microstructures* | TS (MPa) | λ (%) | Remarks |
| 16 | P | 1200 | 820 | 580 | 20 | 60 | 1.4 | 800 | 10 | 120 | × | 11 | 17 | 97 | 80 | C,B | 639 | 130 | Present invention example |
| 17 | Q | 1200 | 820 | 580 | 20 | 60 | 1.4 | 800 | 10 | 120 | ○ | 8 | 22 | 97 | 76 | C | 775 | 93 | Present invention example |
| 18 | R | 1200 | 820 | 580 | 20 | 60 | 1.4 | 800 | 10 | 120 | × | 13 | 38 | 97 | 60 | C,P | 823 | 91 | Present invention example |
| 19 | S | 1200 | 820 | 580 | 20 | 60 | 1.4 | 800 | 10 | 120 | ○ | 10 | 16 | 97 | 82 | C | 631 | 128 | Present invention example |
| 20 | T | 1200 | 820 | 570 | 20 | 60 | 1.4 | 800 | 10 | 120 | ○ | 11 | 11 | 98 | 86 | C | 597 | 132 | Present invention example |
| 21 | a | 1200 | 820 | 580 | 15 | 60 | 1.4 | 800 | 10 | 120 | ○ | 12 | 31 | 98 | 65 | C | 527 | 65 | Comparative example |
| 22 | b | 1200 | 820 | 580 | 25 | 60 | 1.4 | 800 | 10 | 120 | ○ | **16** | 29 | **87** | 67 | C | 546 | 44 | Comparative example |

| Steel sheet No. | Steel No. | Hot rolling conditions | | | | | | Continuous galvanizing and galvan-nealing conditions | | | | Microstructure | | | | | Properties | | Remarks |
|---|---|---|---|---|---|---|---|---|---|---|---|---|---|---|---|---|---|---|---|
| | | Heating temperature (°C) | Finish rolling temperature (°C) | Coiling temperature (°C) | Average cooling rate after coiling (°C/min) | Rolling reduction of cold rolling (%) | Sheet thickness (mm) | Soaking temperature (°C) | Average cooling rate (°C/sec) | Residence time between 400°C to 600°C (sec) | Alloying treatment ○: Yes ×: No | Grain diameter of ferrite ($\mu$m) | Area ratio of martensite (%) | Ratio of martensite having an aspect ratio of less than 3.0 | Area ratio of ferrite (%) | Other microstructures* | TS (MPa) | $\lambda$ (%) | |
| 23 | c | 1280 | 820 | 600 | 30 | 60 | 1.4 | 800 | 10 | 120 | × | 9 | **46** | **83** | 50 | C | 805 | 57 | Comparative example |
| 24 | d | 1200 | 820 | 580 | 15 | 60 | 1.4 | 800 | 10 | 120 | × | 8 | **43** | **81** | 54 | C | 839 | 51 | Comparative example |
| 25 | e | 1200 | 820 | 570 | 15 | 60 | 1.4 | 800 | 10 | 120 | ○ | 11 | **42** | 98 | 55 | C | 753 | 53 | Comparative example |
| 26 | f | 1200 | 820 | 570 | 15 | 60 | 1.4 | 800 | 10 | 120 | × | 10 | 36 | 98 | 61 | C,P | 551 | 73 | Comparative example |
| 27 | g | 1200 | 820 | 570 | 15 | 60 | 1.4 | 800 | 10 | 120 | ○ | 8 | **45** | **84** | 52 | C | 872 | 50 | Comparative example |
| 28 | h | 1200 | 820 | 580 | 20 | 60 | 1.4 | 800 | 10 | 120 | × | **17** | 19 | 97 | 78 | C,P | 729 | 41 | Comparative example |
| 29 | i | 1200 | 820 | 580 | 20 | 60 | 1.4 | 800 | 10 | 120 | ○ | 13 | 22 | 97 | 75 | C | 510 | 69 | Comparative example |

Under line portion: Out of the range of the present invention
*: C: Cementite, B: Bainite, P: Perlite

Next, steel materials having components of present invention steel D, P, and S and comparative steel e were prepared, and galvanized steel sheets were manufactured under various manufacturing conditions. The manufacturing conditions and the results obtained by performing the above evaluation on the obtained steel sheets are collectively shown in Table 3.

[Table 3]

| Steel sheet No. | Steel No. | Hot rolling conditions | | | | Rolling reduction of cold rolling (%) | Sheet thickness (mm) | Continuous galvanizing and galvannealing conditions | | | | Microstructure | | | | | Properties | | Remarks |
|---|---|---|---|---|---|---|---|---|---|---|---|---|---|---|---|---|---|---|---|
| | | Heating temperature (°C) | Finish rolling temperature (°C) | Coiling temperature (°C) | Average cooling rate after coiling (°C/min) | | | Soaking temperature (°C) | Average cooling rate (°C/sec) | Residence time between 400°C to 600°C (sec) | Alloying treatment ○:Yes ×:No | Grain diameter of ferrite (μm) | Area ratio of martensite (%) | Ratio of martensite having an aspect ratio of less than 3.0 | Area ratio of ferrite (%) | Other microstructures* | TS (MPa) | λ (%) | |
| 30 | D | 1230 | **700** | 570 | 20 | 60 | 1.4 | 780 | 15 | 120 | ○ | 10 | 33 | **82** | 64 | C,P | 674 | 58 | Comparative example |
| 31 | D | 1230 | 800 | **670** | 20 | 60 | 1.4 | 780 | 15 | 120 | ○ | 13 | 15 | **77** | 82 | C,P | 592 | 63 | Comparative example |
| 32 | D | 1230 | 800 | 570 | 10 | 60 | 1.4 | 780 | 15 | 120 | ○ | 11 | 19 | 98 | 78 | C | 676 | 113 | Present invention example |
| 33 | D | 1230 | 800 | 570 | 20 | 60 | 1.4 | 780 | 15 | 120 | ○ | 10 | 21 | 98 | 77 | C | 685 | 121 | Present invention example |
| 34 | D | 1230 | 800 | 570 | 20 | 60 | 1.4 | 780 | 15 | 50 | ○ | 9 | 25 | 98 | 73 | C | 705 | 109 | Present invention example |
| 35 | D | 1230 | 800 | 570 | 30 | 60 | 1.4 | 780 | 15 | 120 | ○ | 10 | 30 | 96 | 67 | C | 714 | 115 | Present invention example |
| 36 | D | 1230 | 800 | 570 | **3** | 60 | 1.4 | 780 | 15 | 120 | ○ | 14 | 22 | **84** | 75 | C,P | 661 | 72 | Comparative example |
| 37 | D | 1230 | 800 | 570 | **2** | 60 | 1.4 | 780 | 15 | 120 | ○ | 12 | 18 | **82** | 79 | C,P | 635 | 66 | Comparative example |

EP 2 562 286 B1

| Steel sheet No. | Steel No. | Hot rolling conditions | | | | | Sheet thickness (mm) | Continuous galvanizing and galvannealing conditions | | | | Microstructure | | | | | Properties | | Remarks |
|---|---|---|---|---|---|---|---|---|---|---|---|---|---|---|---|---|---|---|---|
| | | Heating temperature (°C) | Finish rolling temperature (°C) | Coiling temperature (°C) | Average cooling rate after coiling (°C/min) | Rolling reduction of cold rolling (%) | | Soaking temperature (°C) | Average cooling rate (°C/sec) | Residence time between 400°C to 600°C (sec) | Alloying treatment ○: Yes ×: No | Grain diameter of ferrite (μm) | Area ratio of martensite (%) | Ratio of martensite having an aspect ratio of less than 3.0 | Area ratio of ferrite (%) | Other microstructures* | TS (MPa) | λ (%) | |
| 38 | D | 1230 | 800 | 570 | 20 | 60 | 1.4 | 815 | 15 | 120 | ○ | 13 | 19 | 96 | 78 | C | 662 | 128 | Present invention example |
| 39 | D | 1230 | 800 | 570 | 20 | **20** | 2.8 | 780 | 15 | 120 | ○ | 12 | 21 | **84** | 76 | C,P | 706 | 70 | Comparative example |
| 40 | D | 1230 | 800 | 570 | 20 | 40 | 2.1 | 780 | 15 | 130 | ○ | 11 | 12 | 96 | 84 | C | 604 | 119 | Present invention example |
| 41 | D | 1230 | 800 | 570 | 20 | 60 | 1.4 | 780 | **0.5** | 130 | ○ | **23** | 16 | 96 | 81 | C | 630 | 58 | Comparative example |
| 42 | P | 1240 | 820 | 580 | 15 | 60 | 1.4 | 760 | 20 | 130 | ○ | 8 | 22 | 97 | 76 | C | 653 | 127 | Present invention example |
| 43 | P | 1240 | 820 | 580 | 15 | 60 | 1.4 | **880** | 20 | 130 | ○ | **21** | 15 | 97 | 83 | C,B | 617 | 64 | Comparative example |
| 44 | P | 1240 | 820 | 580 | 15 | 60 | 1.4 | 800 | 35 | 130 | ○ | 9 | 17 | 96 | 80 | C | 596 | 135 | Present invention example |

EP 2 562 286 B1

| Steel sheet No. | Steel No. | Hot rolling conditions | | | | | Sheet thickness (mm) | Continuous galvanizing and galvannealing conditions | | | | Microstructure | | | | | Properties | | Remarks |
|---|---|---|---|---|---|---|---|---|---|---|---|---|---|---|---|---|---|---|---|
| | | Heating temperature (°C) | Finish rolling temperature (°C) | Coiling temperature (°C) | Average cooling rate after coiling (°C/min) | Rolling reduction of cold rolling (%) | | Soaking temperature (°C) | Average cooling rate (°C/sec) | Residence time between 400°C to 600°C (sec) | Alloying treatment ○: Yes ×: No | Grain diameter of ferrite (μm) | Area ratio of martensite (%) | Ratio of martensite having an aspect ratio of less than 3.0 | Area ratio of ferrite (%) | Other microstructures* | TS (MPa) | λ (%) | |
| 45 | P | 1240 | 820 | 580 | 15 | 60 | 1.4 | **680** | 20 | 130 | ○ | 11 | **3** | 98 | 93 | C | 649 | 69 | Comparative example |
| 46 | P | 1240 | 820 | 580 | 15 | 60 | 1.4 | 800 | 5 | 130 | ○ | 13 | 18 | 97 | 79 | C,P | 603 | 110 | Present invention example |
| 47 | P | 1240 | 820 | 580 | 15 | 60 | 1.4 | 800 | 5 | **180** | ○ | 14 | **4** | 97 | 93 | C,P | 574 | 54 | Comparative example |
| 48 | P | 1240 | 820 | 580 | 15 | 60 | 1.4 | 800 | 50 | 130 | ○ | 7 | 36 | 97 | 60 | C,B | 702 | 104 | Present invention example |
| 49 | P | 1240 | 820 | 580 | 15 | 60 | 1.4 | 800 | 20 | 130 | ○ | 10 | 20 | 97 | 76 | C,B | 608 | 120 | Present invention example |
| 50 | S | 1200 | 820 | 550 | 15 | 60 | 1.4 | 820 | 10 | 130 | ○ | 11 | 23 | 98 | 74 | C | 627 | 133 | Present invention example |
| 51 | S | 1200 | 820 | 550 | 15 | 60 | 1.4 | 820 | 10 | 140 | ○ | 13 | 11 | 98 | 86 | C | 599 | 128 | Present invention example |

EP 2 562 286 B1

18

| Steel sheet No. | Steel No. | Hot rolling conditions | | | | | | Continuous galvanizing and galvan-nealing conditions | | | | Microstructure | | | | | Properties | | Remarks |
|---|---|---|---|---|---|---|---|---|---|---|---|---|---|---|---|---|---|---|---|
| | | Heating temperature (°C) | Finish rolling temperature (°C) | Coiling temperature (°C) | Average cooling rate after coiling (°C/min) | Rolling reduction of cold rolling (%) | Sheet thickness (mm) | Soaking temperature (°C) | Average cooling rate (°C/sec) | Residence time between 400°C to 600°C (sec) | Alloying treatment ○: Yes ×: No | Grain diameter of ferrite (μm) | Area ratio of martensite (%) | Ratio of martensite having an aspect ratio of less than 3.0 | Area ratio of ferrite (%) | Other microstructures* | TS (MPa) | λ (%) | |
| 52 | S | 1200 | 820 | **630** | 15 | 60 | 1.4 | 820 | 10 | 130 | ○ | 14 | 29 | **88** | 69 | C | 623 | 75 | Comparative example |
| 53 | S | 1200 | 820 | 530 | 15 | 60 | 1.4 | 820 | 10 | 130 | ○ | 9 | 25 | 96 | 71 | C | 655 | 129 | Present invention example |
| 54 | S | 1200 | 820 | 530 | 15 | 60 | 1.4 | 820 | **60** | 130 | × | 9 | **45** | 96 | 51 | C,P | 696 | 55 | Comparative example |
| 55 | e | 1240 | 790 | 590 | **3** | 60 | 1.4 | 800 | 20 | 130 | ○ | 11 | **41** | **87** | 57 | C | 639 | 50 | Comparative example |
| 56 | e | 1240 | 790 | **650** | 20 | 60 | 1.4 | 800 | 20 | 130 | ○ | 10 | **42** | **85** | 56 | C | 647 | 47 | Comparative example |

Under line portion: Out of the range of the present invention
*: C: Cementite, B: Bainite, P: Perlite

EP 2 562 286 B1

From Tables 2 and 3, according to the steel sheets of examples of the present invention in which the component composition and the microstructure of steel are in the range of the present invention, the tensile strength (TS) is 590 MPa or more, the hole expanding ratio after hole cutting by laser processing is high, and the stretch flange formability is excellent. On the other hand, according to the steel sheets of comparative examples in which at least one of the component composition and the microstructure of steel is not in the range of the present invention, the hole expanding ratio after hole cutting by laser processing is low, the stretch flange formability is inferior, and furthermore, the tensile strength (TS) is less than 590 MPa, which is lower than a desired strength.

In addition, according to the steel sheets of examples of the present invention which used steel materials each having a component composition defined by the method of the present invention and which were each processed by the steps of from hot rolling to continuous galvanizing and galvannealing under conditions defined by the method of the present invention, a steel sheet having a steel microstructure in the range of the present invention is obtained, the tensile strength (TS) is 590 MPa or more, the hole expanding ratio after hole cutting by laser processing is high, and the stretch flange formability is excellent. On the other hand, according to the steel sheets of comparative examples in which although steel materials each having a component composition defined by the method of the present invention were used, the steps of from hot rolling to continuous galvanizing and galvannealing did not satisfy the conditions defined by the method of the present invention, and according to the steel sheets of comparative examples in which steel materials each having a component composition defined by the method of the present invention were not used, a steel sheet having a steel microstructure in the range of the present invention is not obtained, the hole expanding ratio after hole cutting by laser processing is low, the stretch flange formability is inferior, and furthermore, the tensile strength (TS) is less than 590 MPa, which is lower than a desired strength.

[Industrial applicability]

Accordingly, the present invention provides a high-strength galvanized steel sheet having a tensile strength of 590 MPa or more and excellent stretch flange formability after hole cutting by laser processing and a method for manufacturing the same.

## Claims

1. A high-strength galvanized steel sheet having excellent formability comprising: steel having a component composition consisting of, on a percent by mass basis, 0.03% to 0.15% of C, less than 0.5% of Si, 1.0% to 2.5% of Mn, 0.05% or less of P, 0.01% or less of S, 0.05% or less of Al, 0.0050% or less of N, 0.05% to 0.8% of Cr, 0.01% to 0.1% of V, optionally at least one of 0.01% to 0.1% of Ti, 0.01% to 0.1% of Nb, 0.01% to 0.1% of Cu, 0.01% to 0.1% of Ni, 0.001% to 0.01% of Sn, 0.01% to 0.5% of Mo and 0.0001% to 0.1% of REM, and the balance being Fe and inevitable impurities; and a zinc plating film on a surface of a steel sheet, wherein a microstructure of the steel contains ferrite having an average grain diameter of 15 $\mu$m or less and 5% to 40% of martensite in an area ratio, and the ratio of martensite having an aspect ratio of less than 3.0 to all the martensite is more than 95% in area ratio, and the total of the area ratio of martensite and the area ratio of ferrite is 95% or more.

2. A method for manufacturing a high-strength galvanized steel sheet comprising the steps of: performing finish rolling of a steel material having the component composition according to Claim 1 at a temperature of $Ar_3$ or more; then performing coiling at a temperature of 600°C or less; performing cooling at an average cooling rate of 5°C/min or more from the completion of the coiling to 400°C; performing pickling or further performing cold rolling at a rolling reduction of 40% or more; then performing soaking at a temperature of 700°C to 820°C; performing cooling to 600°C or less at an average cooling rate of 1°C to 50°C/sec; performing galvanizing or further performing an alloying treatment of a plated layer; and then performing cooling to room temperature, wherein in a process from the cooling performed to 600°C or less to the cooling performed to room temperature, a residence time in a temperature region of 400°C to 600°C is set to 150 seconds or less.

## Patentansprüche

1. Hochfestes verzinktes Stahlblech mit ausgezeichneter Formbarkeit, umfassend: Stahl mit einer Bestandteilzusammensetzung, die auf Basis von Massen-% besteht aus: 0,03% bis 0,15% C, weniger als 0,5% Si, 1,0% bis 2,5% Mn, 0,05% oder weniger P, 0,01% oder weniger S, 0,05% oder weniger Al, 0,0050% oder weniger N, 0,05% bis 0,8% Cr, 0,01% bis 0,1% V, gegebenenfalls wenigstens eines von 0,01% bis 0,1% Ti, 0,01% bis 0,1% Nb, 0,01% bis 0,1% Cu, 0,01% bis 0,1% Ni, 0,001% bis 0,01% Sn, 0,01% bis 0,5% Mo und 0,0001% bis 0,1% REM, wobei der Rest Fe und unvermeidliche Verunreinigungen sind; und einen Zinküberzugsfilm auf einer Oberfläche eines Stahlblechs, wobei ein Mikrogefüge des Stahls Ferrit mit einem durchschnittlichen Korndurchmesser von 15µm oder weniger und 5% bis 40% Martensit in einem Flächenverhältnis umfasst, und das Verhältnis von Martensit, das ein Seitenverhältnis von weniger als 3,0 hat, zu dem gesamten Martensit mehr als 95% im Flächenverhältnis ist und die Summe des Flächenverhältnisses von Martensit und des Flächenverhältnisses von Ferrit 95% oder mehr beträgt.

**2.** Verfahren zur Herstellung eines hochfesten verzinkten Stahlblechs, umfassend folgende Schritte: Ausführen des Fertigwalzens eines Stahlmaterials mit der Komponentenzusammensetzung nach Anspruch 1 bei einer Temperatur von $Ar_3$ oder mehr; anschließendes Aufwickeln bei einer Temperatur von 600°C oder weniger; Ausführen eines Abkühlens mit einer durchschnittlichen Abkühlgeschwindigkeit von 5°C/min oder mehr ab dem Abschluss des Aufwickelns auf 400°C; Ausführen des Beizens oder des weiteren Ausführens des Kaltwalzens bei einer Walzreduzierung von 40% oder mehr; anschließendes Durchwärmen bei einer Temperatur von 700°C bis 820°C; Ausführen einer Abkühlung auf 600°C oder weniger mit einer durchschnittlichen Abkühlgeschwindigkeit von 1°C bis 50°C/s; Ausführen eines Galvanisierens oder des weiteren Ausführens einer Legierungsbehandlung einer plattierten Schicht; und dann Ausführen einer Abkühlung auf Raumtemperatur, wobei in einem Prozess von der Abkühlung auf 600°C oder weniger bis zur Abkühlung auf Raumtemperatur eine Verweilzeit in einem Temperaturbereich von 400°C bis 600°C auf 150 Sekunden oder weniger eingestellt ist.

**Revendications**

**1.** Tôle d'acier galvanisée de haute résistance ayant une excellente aptitude au formage comprenant : de l'acier ayant une composition en constituants constituée, sur une base en pourcentage en masse, de 0,03 % à 0,15 % de C, moins de 0,5 % de Si, de 1,0 % à 2,5 % de Mn, 0,05 % ou moins de P, 0,01 % ou moins de S, 0,05 % ou moins d'Al, 0,0050 % ou moins de N, de 0,05 % à 0,8 % de Cr, de 0,01 % à 0,1 % de V, éventuellement au moins l'un parmi 0,01 % à 0,1 % de Ti, 0,01 % à 0,1 % de Nb, 0,01 % à 0,1 % de Cu, 0,01 % à 0,1 % de Ni, 0,001 % à 0,01 % de Sn, 0,01 % à 0,5 % de Mo et 0,0001 % à 0,1 % de terres rares, le reste étant du fer et des impuretés inévitables ; et un film de placage de zinc sur une surface d'une tôle d'acier, dans laquelle une microstructure de l'acier contient de la ferrite ayant un diamètre de grain moyen de 15 µm ou moins et de 5 % à 40 % de martensite en fraction surfacique, et la fraction de martensite ayant un rapport d'aspect inférieur à 3,0 rapportée à toute la martensite est supérieure à 95 % en fraction surfacique et le total de la fraction surfacique de martensite et de la fraction surfacique de ferrite est supérieur ou égal à 95 %.

**2.** Procédé de fabrication d'une tôle d'acier galvanisée de haute résistance comprenant les étapes consistant : à réaliser un laminage de finissage d'un matériau d'acier ayant la composition en constituants selon la revendication 1 à une température supérieure ou égale à $Ar_3$ ; puis à réaliser un enroulement à une température inférieure ou égale à 600 °C ; à réaliser un refroidissement à une vitesse moyenne de refroidissement supérieure ou égale à 5 °C/min depuis la fin de l'enroulement jusqu'à 400 °C ; à réaliser un décapage ou à réaliser en outre un laminage à froid à un taux de réduction par laminage supérieur à égal à 40 % ; puis à réaliser un maintien à une température de 700 °C à 820 °C ; à réaliser un refroidissement jusqu'à 600 °C ou moins à une vitesse de refroidissement moyenne de 1 °C à 50 °C/sec ; à réaliser une galvanisation ou à réaliser en outre un traitement d'alliation d'une couche plaquée ; puis à réaliser un refroidissement jusqu'à la température ambiante, où lors d'une opération allant du refroidissement à 600 °C ou moins au refroidissement réalisé à température ambiante, un temps de séjour dans une région de température de 400 °C à 600 °C est défini sur 150 secondes ou moins.

FIG. 1

| | AREA RATIO OF MARTENSITE (%) |
|---|---|
| ○ | 5～40 |
| □ | ＜5 |
| ◇ | ＞40 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1443124 A1
- JP 2007070659 A
- JP 6073497 A
- JP 4173945 A

**Non-patent literature cited in the description**

- *Tetsu-to-Hagane,* 1989, vol. 75th (7), 10-24